# EUROPEAN PATENT SPECIFICATION

(11) **EP 2 798 889 B1**
(45) Date of publication and mention of the grant of the patent: **07.08.2019**
(21) Application number: 11878961.9
(22) Date of filing: 30.12.2011
(51) Int. Cl.: H04W 4/70, H04W 4/08, H04W 68/02

(54) **ONE GROUP PAGING SCHEME FOR MACHINE-TO-MACHINE COMMUNICATION**
GRUPPEN-PAGINGSCHEMA FÜR EINE MASCHINE-ZU-MASCHINE-KOMMUNIKATION
SCHÉMA DE RADIOMESSAGERIE DE GROUPE POUR DES COMMUNICATIONS DE MACHINE À MACHINE

(43) Date of publication of application: 05.11.2014
(73) Proprietor: Intel Corporation, Santa Clara, CA 95054 (US)
(72) Inventor: HUANG, Rui, Beijing 100085 (CN); LI, Honggang, Beijing 100080 (CN); MOHANTY, Shantidev, San Jose, California 95134 (US)
(74) Representative: HGF Limited
(86) International application number: PCT/CN2011/084967
(87) International publication number: WO 2013/097159

(56) References cited:
- EP-A1- 2 369 883
- WO-A1-2011/036507
- WO-A2-2011/084024
- WO-A2-2011/118912
- WO-A2-2011/129575
- WO-A2-2011/129575
- US-A1- 2011 306 349

## Description

### TECHNICAL FIELD

This application relates to machine-to-machine communication in some advance wireless systems, such as IEEE 802.16 and 3GPP.

### BACKGROUND

Machine-to-machine communication is a very distinct capability that enables the implementation of the "Internet of things". Machine-to-machine communication is defined as an information exchange between a subscriber station and a server station in a core network (through a base station) or between subscriber stations, which may be carried out without any human interaction.

Several industry reports have scoped out the huge potential for this market, with millions of devices being connected over the next five years and revenues in excess of $300 billion (Harbor Research, 2009). So, machine-to-machine technology is a hot research item in some dominated wireless standard research groups, i.e., 3GPP and 802.16.

According to one IEEE 802.16p system requirement, a machine-to-machine system shall support a large number of devices and mechanisms for low power consumption in machine-to-machine devices. Therefore, there are expected to be a large number of machine-to-machine devices in the domain of the machine-to-machine base station. The machine-to-machine support thus is expected to require a huge amount of interactions between the machine-to-machine devices and their supporting base station. For instance, where the base station needs to communicate with the separated machine-to-machine devices, one by one, this would result in some network congestion.

Thus, there is a continuing need for a machine-to-machine solution that overcomes the shortcomings of the prior art.

WO 2011/129575, in the English equivalent US 2013/029716, refers to group-based M2M communications in which a plurality of M2M communication devices form a group and a head of the group performs communications with a base station on behalf of the group.

EP 2 369 883 refers to a group paging mechanism for machine-type communication (MTC) devices (or UEs) for paging a large number of devices in a network so that only little traffic due to paging is generated.

According to a first aspect of the invention, there is provided a method as claimed in claim 1.

According to a second aspect of the invention, there is provided a machine-to-machine-capable mobile station as claimed in claim 10.

Further embodiments of the invention are included in the dependent claims.

### BRIEF DESCRIPTION OF THE DRAWINGS

The foregoing aspects and many of the attendant advantages of this document will become more readily appreciated as the same becomes better understood by reference to the following detailed description, when taken in conjunction with the accompanying drawings, wherein like reference numerals refer to like parts throughout the various views, unless otherwise specified.
Figure 1 is a simplified block diagram of a wireless network supporting a M2M group-based paging method, according to some embodiments;
Figure 2 is a block diagram of a basic architecture for M2M communication proposed in the IEEE 802.16m specification, according to some embodiments;
Figure 3 is a hypothetical wireless network consisting of a M2M-capable and non-M2M-capable mobile stations (e.g. smart meters) in which the M2M group-based paging method of Figure 1 is used, according to some embodiments;
Figure 4 is a timing diagram showing operations between an M2M-capable base station and an M2M-capable mobile station, where the base station employs the M2M group-based paging method of Figure 1, according to some embodiments;
Figure 5 is a flow diagram showing the operations of the M2M group-based paging method of Figure 1, according to some embodiments; and
Figure 6 is a simplified block diagram showing some features of the M2M-capable base station and M2M-capable mobile station that perform the group-based paging method of Figure 1, according to some embodiments.

### DETAILED DESCRIPTION

In accordance with the embodiments described herein, a group paging method is disclosed for efficient machine-to-machine communication in a wireless network. The group paging method enables M2M-capable base stations to group M2M-capable mobile stations according to their traffic properties, assign them a group paging ID, and thereafter page the M2M device, by way of a paging channel. The group paging method mitigates traffic congestion on the wireless network.

In the following detailed description, reference is made to the accompanying drawings, which show by way of illustration specific embodiments in which the subject matter described herein may be practiced. However, it is to be understood that other embodiments will become apparent to those of ordinary skill in the art upon reading this disclosure. The following detailed description is, therefore, not to be construed in a limiting sense, as the scope of the subject matter is defined by the claims.

The background section describes the potential impact from machine-to-machine services. Machine-to-machine (M2M) services are distinct from human interaction services (e.g., laptop and cellular phone use) in several respects. For example, M2M transmissions generally involve small quantities of data being transmitted. The M2M transmissions may be infrequent, relative to human transmissions. The M2M transmissions tend to be location-specific. The M2M devices tend to have a lower mobility, relative to highly mobile human interaction devices. And, the M2M transmissions may be time-controlled, that is, the data may be transmitted in a predefined interval. In short, these features enable the optimization of the existing human interaction services protocol, which is focused on making dedicated subscriber communication possible.

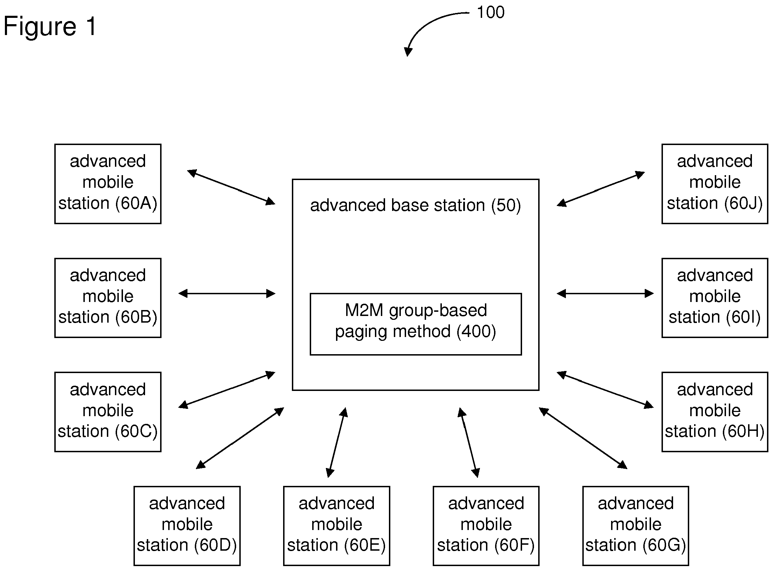

Figure 1 is a simplified block diagram of a wireless network 100 with an advanced base station 50 that includes an M2M group-based paging method 400, according to some embodiments. In addition to the advanced base station 50, the wireless network 100 includes several advanced mobile stations (AMSs) 60A, 60B, ..., 60J (hereafter, "AMSs 60). The AMSs may be sensors or meters, for example, that are designed with minimum capability to report data, although the types of data that may be reported is quite extensive. Examples of data that may be received from these AMSs include temperature or voltage information, optical data, chemical composition, and so on.

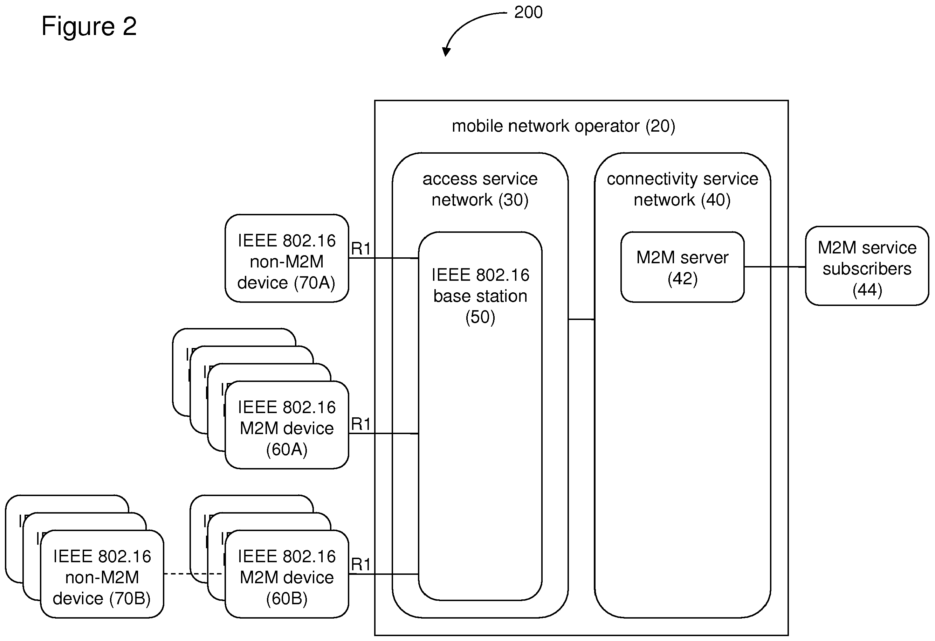

The basic architecture for M2M communication is proposed in the IEEE 802.16m specification, and is depicted in Figure 2, according to some embodiments. A system 200 consists of a mobile network operator 20 and several mobile devices, denoted as IEEE 802.16 M2M devices 60A, 60B... (collectively M2M devices 60 or M2M mobile stations 60) and IEEE 802.16 non-M2M devices 70A, 70B... (collectively, non-M2M devices 70 or non-M2M mobile stations 70). The mobile network operator 20 features an access service network 30 and a connectivity service network 40. An IEEE 802.16 base station 50 in the access service network 30 is connected to several of the M2M base stations 60 and non-M2M base stations 70. An M2M server 40 in the connectivity service network 40 is connected to M2M service subscribers 44.

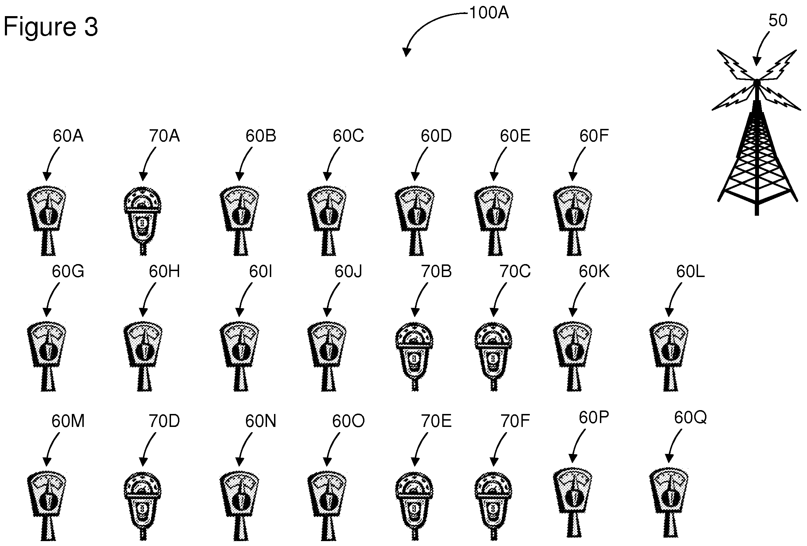

One efficient method to optimize the machine-to-machine network is aggregation paging for multiple M2M devices, defined herein as "M2M group-based paging". Figure 3 presents a hypothetical wireless network 100A consisting of a parking lot with two different types of meters. Meters 60A - 60Q are M2M-capable advanced mobile devices (collectively, AMSs 60) while meters 70A - 70F are not M2M-capable advanced mobile devices (collectively, AMSs 70). Suppose, for example, that the meters simply report whether a car is parked at their station. The base station 50 services both types of sensors, the AMSs 60 and the AMSs 70. Where it supports the group-based paging method 400, the base station 50 will be able to communicate with the AMSs 60 over a paging channel, using a technique described below. Communication with the legacy AMSs 70 will take place on a device-by-device basis. In other words, the base station 50 will be limited to individually communicating with the legacy AMSs 70.

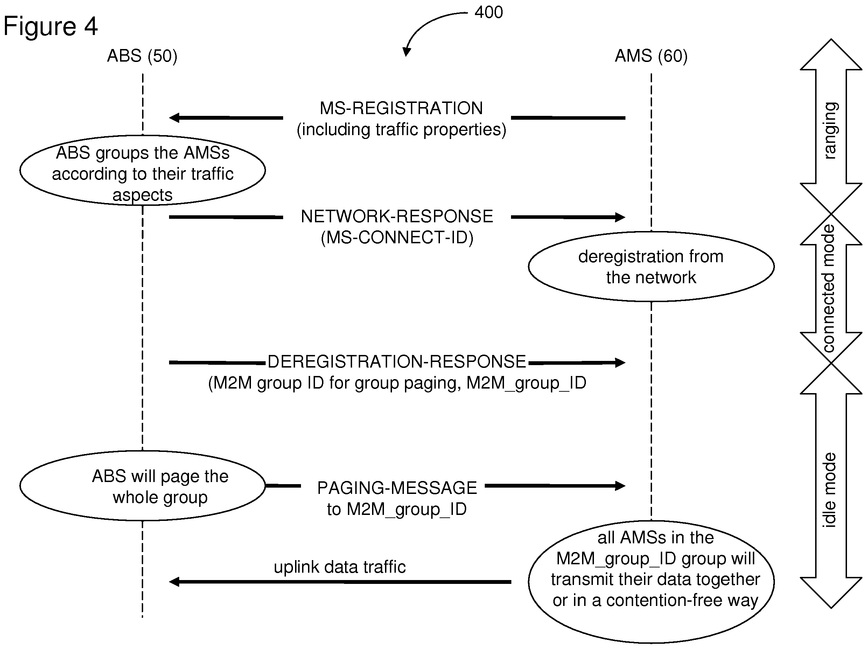

Figure 4 shows the M2M group-based paging method 400 as a series of back-and-forth operations between an advanced base station (ABS) 50 and an advanced mobile station (AMS) 60, according to some embodiments, where the latter is presumably one of several additional AMSs in a wireless network, such as the wireless network 100A (Figure 3). The mechanism shown in Figure 4 may be valid in other wireless systems, such as 3GPP, with some term modifications. The operations of the M2M group-based paging method 400 commence with the AMS 60 attempting to enter the wireless network.

The M2M group-based paging method 400 features two vertical lines, one denoting the ABS 50 and the other denoting the AMS 60. As used herein, the ABS and AMS are defined as entities having capability under the IEEE 802.16m specification, with mobile stations being further divided into M2M-capable (60) and non-M2M-capable (70) devices. The arrows at the right side of Figure 2 describes characteristics of the AMS 60, which is either ranging (that is, trying to find an ABS to be its serving base station), in a connected mode (connection with the ABS has been established), or in an idle mode (connected to the wireless network, but not presently communicating with the ABS).

The group-based paging method 400 commences with the AMS 60 entering or reentering the network. Initially, the AMS 60 will inform the ABS 50 about its traffic properties (e.g., the location, transmission duration, and action time), with these traffic properties being included in a request to register on the wireless network, denoted as MS REGISTRATION (the 802.16m request is known as AAI-REG-REQ). In some embodiments, the traffic properties are used by the ABS 50 as grouping factors, used to decide which AMSs to group together for subsequent paging operations.

In reply to the MS REGISTRATION request made by the AMS 60, the ABS 50 feeds back a connection identifier, denoted MS-CONNECT-ID, to the AMS, denoted NETWORK-RESPONSE (the 802.16m connection identifier is known as CID and the response is known as AAI-REQ-RSP). Once it has its own unique MS-CONNECT-ID, the AMS 60 may communicate with the ABS 50, and may forward its data to ABS as a registered member of the wireless network. As shown by the arrows on the right, since connection to the network has been established, the AMS 60 is now in a connected mode.

When not performing any data transmissions, to save power, the AMS 60 may enter an idle state, or a sleep mode. While in the idle mode or sleep mode, the AMS 60 is nevertheless able to listen to a paging channel. In some embodiments, the AMS 60 checks the paging channel periodically, while in sleep mode, so as to be apprised of any multicast transmissions from the ABS 50.

Upon obtaining relevant information of multiple machine-to-machine devices located in its cell, the ABS 50 bundles the M2M AMSs 60 together, so to speak, and assigns a unique M2M_group_ID to the bundled group. The identified AMSs to which the M2M_group_ID is assigned share similar traffic properties, such as having a similar transmission interval, for example. The ABS 50 informs each M2M AMS 60 in this identified group of its M2M_group_ID in the deregistration signaling, denoted DEREGISTRATION-RESPONSE (the 802.16m response is known as AAI-DEG-RSP). The M2M_group_ID is multicast by the ABS 50 in the DEREGISTRATION-RESPONSE. Once it is deregistered from the network, the M2M AMS 60 will enter into an idle mode. This is desired, for example, in order to save power.

From this point, all AMSs 60 having this M2M_group_ID may be paged by a single paging message, denoted PAGING-MESSAGE (the 802.16m message is known as AAI-PAG-ADV) in Figure 4. The ability to page several M2M devices simultaneously reduces the paging overhead and network congestion on the wireless network, in some embodiments. In some embodiments, AMSs 60 that are paged by the aggregated paging may forward their data, using either aggregation or separation, to the ABS 50. If aggregation is used, the data for the individual AMSs 60 are transmitted together. If separation is used, the data for the individual AMSs 60 are transmitted separately.

Once the ABS 50 pages the entire group of ABSs 60 sharing the M2M_group_ID, the AMSs will transmit their data together or in a contention-free way, in some embodiments. This means that the ABS 50 has scheduled the individual M2M devices when paging them, such that the M2M devices in this group need not request contested resources.

In the prior art, to achieve the results illustrated in Figure 4, multiple paging messages would have to be sent by the ABS 50 to each AMS in the wireless network. This group-based paging approach reduces the paging channel overload greatly for the machine-to-machine network. In current specifications and protocols, there exists only one-to-one paging, in which the page includes the specific mobile station's MAC address. By assigning a group ID to the AMSs having common traffic properties, the ABS is able to page multiple AMSs in the wireless network simultaneously.

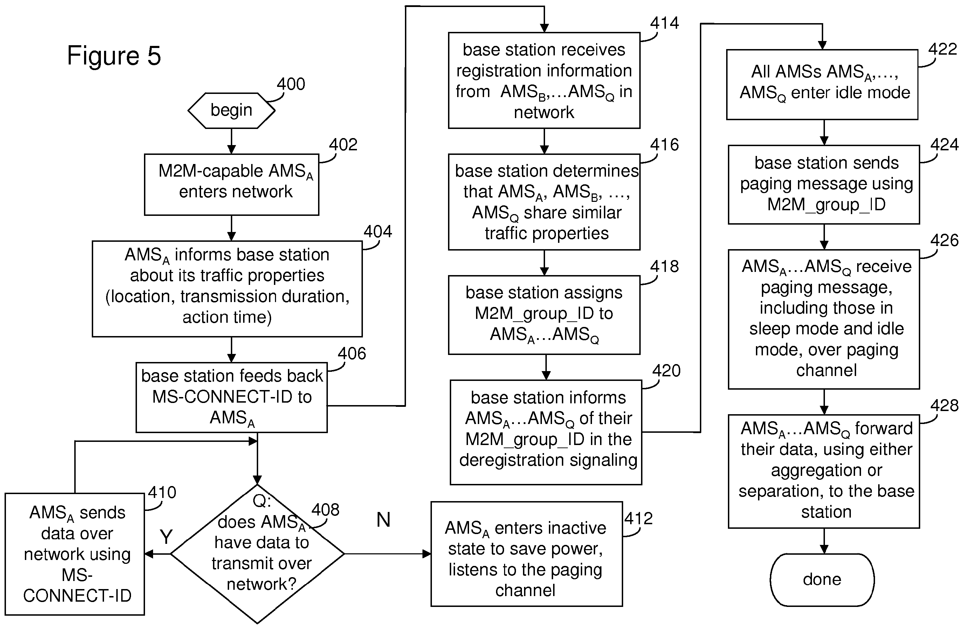

Figure 5 is a flow diagram depicting the operations of Figure 4, according to some embodiments. The operations of Figure 5 are assumed to be part of a wireless network, such as the wireless network 100A of Figure 3, with an M2M-capable ABS 50 and M2M-capable AMSs 60A - 60Q, as well as non-M2M-capable AMSs 70A - 70F. Of the M2M-capable AMSs 60, a single AMS 60, denoted AMS_{A}, is entering the wireless network 100A. (Where they constitute stationary sensors or meters, as in Figure 3, the AMSs 60 may not actually "enter" the network. Nevertheless, the operations of Figure 5 are performed at the outset for each AMS wanting to register with the network.)

First, the M2M-capable AMS_{A} enters the network 100A (block 402). The AMS_{A} informs the ABS 50 about its traffic properties, including, but not limited to, location, transmission duration, and action time (block 404). Upon receiving the request to enter the network (MS-REGISTRATION), the ABS 50 feeds a unique identifier (MS-CONNECT-ID) to the AMS_{A} (block 406). Where it has data to send over the network 100A (block 408), the AMS_{A} transmits using the MS-CONNECT-ID (block 410). Otherwise, the AMS_{A} enters a sleep mode (block 412). In some embodiments, the AMS_{A} continues to periodically listen to the paging channel while in sleep mode.

Meanwhile, the ABS 50 may receive registration information from the other AMSs on the wireless network 100A, denoted AMS_{B}, ..., AMS_{Q} (block 414). Where it determines that these additional AMSs share similar traffic properties (block 416), the ABS 50 assigns a new group identifier, denoted M2M_group_ID, to AMS_{A}, AMS_{B}, ..., AMS_{Q} (block 418). The ABS 50 informs AMS_{A}, ..., AMS_{Q} of their new group identifier in the deregistration signaling (block 420). In some embodiments, the DEREGISTRATION_RESPONSE message is multicast to all AMSs sharing the M2M_GROUP_ID. Where they are not transmitting or receiving, the AMSs AMS_{A}, ..., AMS_{Q} enter an idle mode (block 422).

Thereafter, the ABS 50 is able to communicate with the AMSs AMS_{A}, ..., AMS_{Q} over a paging channel. The ABS 50 sends the paging message using the M2M_group_ID (block 424). The AMS_{A}, ..., AMS_{Q}, including those AMSs in either sleep mode or idle mode, will receiving paging messages over the paging channel from the ABS 50 (block 426). Finally, the AMS_{A}, ..., AMS_{Q} are able to forward their data, using either aggregation or separation, to the ABS 50 (block 428).

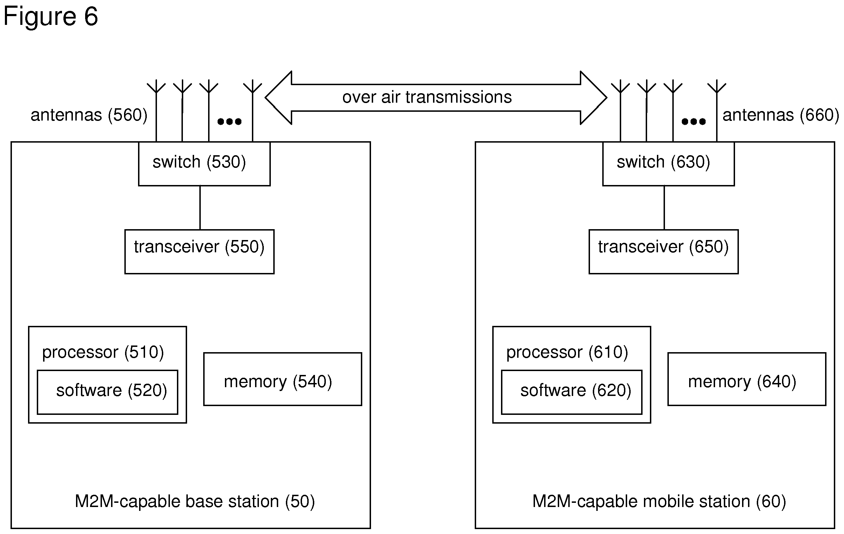

Figure 6 is a simplified block diagram of the M2M-capable ABS 50 and M2M-capable AMS 60, according to some embodiments. Both the ABS 50 and AMS 60 include additional circuitry that is not shown in Figure 6, but they do share many common features. Both include one or more antennas 560, 660, for receiving incoming over-the-air transmissions, and a transceiver 550, 650, for processing the incoming signal. Both include some processor 510, 610, and software 520, 620 being executed by the processor, as well as some memory 540, 640. The operations of Figures 4 and 5 may be implemented using software, firmware, hardware, or a combination of these. In some embodiments, the operations of Figures 4 and 5 are implemented, in part, using software 520, 620.

While the application has been described with respect to a limited number of embodiments, those skilled in the art will appreciate numerous modifications and variations therefrom. It is intended that the appended claims cover all such modifications and variations as fall within the true spirit and scope of the invention.

## Claims

1. A method (400) for communicating over a wireless network (100A) between a base station (50) and a plurality of machine-to-machine-capable mobile stations (60A-J), the method comprising:
receiving, by the base station, a request to register on the wireless network from a first mobile station of the plurality of machine-to-machine-capable mobile stations, wherein the request to register includes a first traffic property;
assigning (406), by the base station, a connection identifier to the first mobile station;
receiving, by the base station, a second request to register on the wireless network from a second mobile station of the plurality of machine-to-machine-capable mobile stations, wherein the second request to register includes a second traffic property, and wherein the first traffic property and the second traffic property are identical;
assigning (418), by the base station, a group identifier to the first mobile station and the second mobile station, wherein the assignment is based on the first traffic property and the second traffic property and informing (420) the first mobile station and second mobile station of the assigned group identifier;
sending (424), by the base station, a paging message over a paging channel to the first mobile station and the second mobile station using the assigned group identifier.

2. The method of claim 1, further comprising:
determining, by the base station, that the first traffic property and the second traffic property are identical; and
receiving, by the base station, the traffic property along with the request to register from the first mobile station;
wherein the traffic property comprises location information about the first mobile station.

3. The method of claim 1, further comprising:
determining, by the base station, that the first traffic property and the second traffic property are identical; and
receiving, by the base station, the traffic property along with the request to register from the first mobile station;
wherein the traffic property comprises transmission duration information about the first mobile station.

4. The method of claim 1, further comprising:
determining, by the base station, that the first traffic property and the second traffic property are identical; and
receiving, by the base station, the traffic property along with the request to register from the first mobile station;
wherein the traffic property comprises action time information about the first mobile station.

5. The method of claim 1, communicating, by the base station, with the mobile station and the second mobile station using the assigned group identifier further comprising:
communicating, by the base station, with the first mobile station immediately; and
communicating, by the base station, with the second mobile station after a time delay;
wherein the first mobile station is in an active state or inactive state and the second mobile station is in an active state or inactive state.

6. The method of claim 1, further comprising:
broadcasting, by the base station, over a paging channel or other broadcast channel using the assigned group identifier; wherein only the first mobile station and the second mobile station will receive the transmission.

7. The method of claim 1, further comprising:
determining, by the base station, that the first traffic property and the second traffic property are identical;
receiving, by the base station, a third request to register on the wireless network from a third mobile station of the plurality of mobile stations, wherein the third request to register includes a third traffic property; and
not communicating, by the base station, the assigned group identifier to the third base station because the third traffic property is not identical to the first traffic property.

8. The method of claim 1, further comprising:
receiving, by the base station, data from the first mobile station and the second mobile station using an aggregated scheduling resource.

9. The method of claim 7, further comprising:
receiving, by the base station, data from the third mobile station using a separated scheduling resource.

10. A machine-to-machine-capable mobile station (60), comprising:
one or more antennas (660) to transmit a signal and to receive a second signal in a wireless network (100A);
a transceiver (650) to convert received signals to digital form and convert signals to be transmitted to analog form; and
software (620) being executed by a processor (610), the software to process the received signals and the signals to be transmitted, the software further to:
transmit (404) a request to register on the wireless network to a base station on the wireless network, wherein the request to register includes a traffic property;
receive a connection identifier from the base station;
receive (420) an assigned group identifier from the base station, wherein the assigned group identifier is based on other mobile stations sharing similar traffic properties and receive a paging message over a paging channel using the assigned group identifier.

11. The machine-to-machine-capable mobile station of claim 10, the software to further:
put the mobile station into an idle mode;
wherein the mobile station listens to a paging channel to receive the paging message while in the idle mode.

12. The machine-to-machine-capable mobile station of claim 10, the software to further:
enter into a sleep mode;
wherein the mobile station listens to a paging channel to receive the paging message while in the sleep mode.

13. The machine-to-machine-capable mobile station of claim 10, the software to further:
receive a broadcast from the base station over the paging channel, wherein the broadcast uses the assigned group identifier.

14. The machine-to-machine-capable mobile station of claim 10, the software to further:
send data to the base station using aggregation.

15. The machine-to-machine-capable mobile station of claim 10, the software to further:
send data to the base station using separated scheduling resource.

## Patentansprüche

1. Verfahren (400) zum Kommunizieren über ein Drahtlosnetzwerk (100A) zwischen einer Basisstation (50) und einer Vielzahl von Machine-to-Machine-fähigen Mobilstationen (60A-J), wobei das Verfahren Folgendes umfasst:
Empfangen, durch die Basisstation, einer Registrierungsanfrage auf dem Drahtlosnetzwerk von einer ersten Mobilstation der Vielzahl von Machine-to-Machine-fähigen Mobilstationen, wobei die Registrierungsanfrage eine erste Datenverkehrseigenschaft enthält;
Zuweisen (406), durch die Basisstation, einer Verbindungskennung zu der ersten Mobilstation;
Empfangen, durch die Basisstation, einer zweiten Registrierungsanfrage auf dem Drahtlosnetzwerk von einer zweiten Mobilstation der Vielzahl von Machine-to-Machine-fähigen Mobilstationen, wobei die zweite Registrierungsanfrage eine zweite Datenverkehrseigenschaft enthält, und wobei die erste Datenverkehrseigenschaft und die zweite Datenverkehrseigenschaft identisch sind;
Zuweisen (418), durch die Basisstation, einer Gruppenkennung zu der ersten Mobilstation und der zweiten Mobilstation, wobei die Zuweisung auf der ersten Datenverkehrseigenschaft und der zweiten Datenverkehrseigenschaft basiert, und Informieren (420) der ersten Mobilstation und der zweiten Mobilstation über die zugewiesene Gruppenkennung;
Senden (424), durch die Basisstation, einer Paging-Nachricht über einen Paging-Kanal zu der ersten Mobilstation und der zweiten Mobilstation unter Verwendung der zugewiesenen Gruppenkennung.

2. Verfahren nach Anspruch 1, das ferner Folgendes umfasst:
Bestimmen, durch die Basisstation, dass die erste Datenverkehrseigenschaft und die zweite Datenverkehrseigenschaft identisch sind; und
Empfangen, durch die Basisstation, der Datenverkehrseigenschaft zusammen mit der Registrierungsanfrage von der ersten Mobilstation;
wobei die Datenverkehrseigenschaft Positionsinformationen über die erste Mobilstation umfasst.

3. Verfahren nach Anspruch 1, das ferner Folgendes umfasst:
Bestimmen, durch die Basisstation, dass die erste Datenverkehrseigenschaft und die zweite Datenverkehrseigenschaft identisch sind; und
Empfangen, durch die Basisstation, der Datenverkehrseigenschaft zusammen mit der Registrierungsanfrage von der ersten Mobilstation;
wobei die Datenverkehrseigenschaft Sendedauerinformationen über die erste Mobilstation umfasst.

4. Verfahren nach Anspruch 1, das ferner Folgendes umfasst:
Bestimmen, durch die Basisstation, dass die erste Datenverkehrseigenschaft und die zweite Datenverkehrseigenschaft identisch sind; und
Empfangen, durch die Basisstation, der Datenverkehrseigenschaft zusammen mit der Registrierungsanfrage von der ersten Mobilstation;
wobei die Datenverkehrseigenschaft Aktionszeitinformationen über die erste Mobilstation umfasst.

5. Verfahren nach Anspruch 1 zum Kommunizieren, durch die Basisstation, mit der Mobilstation und der zweiten Mobilstation unter Verwendung der zugewiesenen Gruppenkennung, das ferner Folgendes umfasst:
Kommunizieren, durch die Basisstation, mit der ersten Mobilstation unverzüglich; und
Kommunizieren, durch die Basisstation, mit der zweiten Mobilstation nach einer Zeitverzögerung;
wobei sich die erste Mobilstation in einem aktiven Zustand oder einem inaktiven Zustand befindet, und die zweite Mobilstation sich in einem aktiven Zustand oder einem inaktiven Zustand befindet.

6. Verfahren nach Anspruch 1, das ferner Folgendes umfasst:
Übertragen, durch die Basisstation, über einen Paging-Kanal oder einen anderen Übertragungskanal unter Verwendung der zugewiesenen Gruppenkennung;
wobei nur die erste Mobilstation und die zweite Mobilstation die Übertragung empfangen.

7. Verfahren nach Anspruch 1, das ferner Folgendes umfasst:
Bestimmen, durch die Basisstation, dass die erste Datenverkehrseigenschaft und die zweite Datenverkehrseigenschaft identisch sind;
Empfangen, durch die Basisstation, einer dritten Registrierungsanfrage auf dem Drahtlosnetzwerk von einer dritten Mobilstation der Vielzahl von Mobilstationen, wobei die dritte Registrierungsanfrage eine dritte Datenverkehrseigenschaft enthält; und
nicht Kommunizieren, durch die Basisstation, der zugewiesenen Gruppenkennung zu der dritten Basisstation, weil die dritte Datenverkehrseigenschaft nicht mit der ersten Datenverkehrseigenschaft identisch ist.

8. Verfahren nach Anspruch 1, das ferner Folgendes umfasst:
Empfangen, durch die Basisstation, von Daten von der ersten Mobilstation und der zweiten Mobilstation unter Verwendung einer aggregierten Planungsressource.

9. Verfahren nach Anspruch 7, das ferner Folgendes umfasst:
Empfangen, durch die Basisstation, von Daten von der dritten Mobilstation unter Verwendung einer getrennten Planungsressource.

10. Machine-to-Machine-fähige Mobilstation (60), die Folgendes umfasst:
eine oder mehrere Antennen (660) zum Übertragen eines Signals und zum Empfangen eines zweiten Signals in einem Drahtlosnetzwerk (100A);
einen Transceiver (650) zum Umwandeln von empfangenen Signalen in eine digitale Form und zum Umwandeln von zu sendenden Signalen in eine analoge Form; und
Software (620), die von einem Prozessor (610) ausgeführt wird, um die empfangenen Signale und die zu sendenden Signale zu verarbeiten, wobei die Software ferner für Folgendes ausgelegt ist:
Senden (404) einer Registrierungsanfrage auf dem Drahtlosnetzwerk zu einer Basisstation auf dem Drahtlosnetzwerk, wobei die Registrierungsanfrage eine Datenverkehrseigenschaft enthält;
Empfangen einer Verbindungskennung von der Basisstation;
Empfangen (420) einer zugewiesenen Gruppenkennung von der Basisstation, wobei die zugewiesene Gruppenkennung auf anderen Mobilstationen basiert, die ähnliche Datenverkehrseigenschaften teilen, und
Empfangen einer Paging-Nachricht über einen Paging-Kanal unter Verwendung der zugewiesenen Gruppenkennung.

11. Machine-to-Machine-fähige Mobilstation nach Anspruch 10, wobei die Software ferner für Folgendes ausgelegt ist:
Versetzen der Mobilstation in einen Ruhemodus;
wobei die Mobilstation im Ruhemodus einen Paging-Kanal abhorcht, um die Paging-Nachricht zu empfangen.

12. Machine-to-Machine-fähige Mobilstation nach Anspruch 10, wobei die Software ferner für Folgendes ausgelegt ist:
Eintreten in einen Schlafmodus;
wobei die Mobilstation im Schlafmodus einen Paging-Kanal abhorcht, um die Paging-Nachricht zu empfangen.

13. Machine-to-Machine-fähige Mobilstation nach Anspruch 10, wobei die Software ferner für Folgendes ausgelegt ist:
Empfangen einer Sendung von der Basisstation über den Paging-Kanal, wobei die Sendung die zugewiesene Gruppenkennung verwendet.

14. Machine-to-Machine-fähige Mobilstation nach Anspruch 10, wobei die Software ferner für Folgendes ausgelegt ist:
Senden von Daten zu der Basisstation unter Verwendung von Aggregation.

15. Machine-to-Machine-fähige Mobilstation nach Anspruch 10, wobei die Software ferner für Folgendes ausgelegt ist:
Senden von Daten zu der Basisstation unter Verwendung einer getrennten Planungsressource.

## Revendications

1. Procédé (400) pour communiquer sur un réseau sans fil (100A) entre une station de base (50) et une pluralité de stations mobiles ayant une capacité machine-à-machine (60A-J), le procédé consistant à :
recevoir, avec la station de base, une demande d'enregistrement sur le réseau sans fil depuis une première station mobile de la pluralité de stations mobiles ayant une capacité machine-à-machine, dans lequel la demande d'enregistrement comprend une première propriété de trafic ;
attribuer (406), avec la station de base, un identifiant de connexion à la première station mobile ;
recevoir, avec la station de base, une seconde demande d'enregistrement sur le réseau sans fil depuis une seconde station mobile de la pluralité de stations mobiles ayant une capacité machine-à-machine, dans lequel la seconde demande d'enregistrement comprend une seconde propriété de trafic, et dans lequel la première propriété de trafic et la seconde propriété de trafic sont identiques ;
attribuer (418), avec la station de base, un identifiant de groupe à la première station mobile et à la seconde station mobile, dans lequel l'attribution est basée sur la première propriété de trafic et la seconde propriété de trafic, et informer (420) la première station mobile et la seconde station mobile de l'identifiant de groupe attribué ;
envoyer (424), avec la station de base, un message de radiomessagerie sur un canal de radiomessagerie à la première station mobile et à la seconde station mobile en utilisant l'identifiant de groupe attribué.

2. Procédé selon la revendication 1, consistant en outre à :
déterminer, avec la station de base, que la première propriété de trafic et la seconde propriété de trafic sont identiques ; et
recevoir, avec la station de base, la propriété de trafic en même temps que la demande d'enregistrement depuis la première station mobile ;
dans lequel la propriété de trafic comprend des informations de localisation concernant la première station mobile.

3. Procédé selon la revendication 1, consistant en outre à :
déterminer, avec la station de base, que la première propriété de trafic et la seconde propriété de trafic sont identiques ; et
recevoir, avec la station de base, la propriété de trafic en même temps que la demande d'enregistrement depuis la première station mobile ;
dans lequel la propriété de trafic comprend des informations de durée de transmission concernant la première station mobile.

4. Procédé selon la revendication 1, consistant en outre à :
déterminer, avec la station de base, que la première propriété de trafic et la seconde propriété de trafic sont identiques ; et
recevoir, avec la station de base, la propriété de trafic en même temps que la demande d'enregistrement depuis la première station mobile ;
dans lequel la propriété de trafic comprend des informations de temps d'action concernant la première station mobile.

5. Procédé selon la revendication 1, dans lequel communiquer, avec la station de base, avec la station mobile et la seconde station mobile en utilisant l'identifiant de groupe attribué, consiste en outre à :
communiquer, avec la station de base, avec la première station mobile immédiatement ; et
communiquer, avec la station de base, avec la seconde station mobile après un temps de retard ;
dans lequel la première station mobile est dans un état actif ou un état inactif et la seconde station mobile est dans un état actif ou un état inactif.

6. Procédé selon la revendication 1, consistant en outre à :
diffuser, avec la station de base, sur un canal de radiomessagerie ou un autre canal de diffusion en utilisant l'identifiant de groupe attribué ;
dans lequel seules la première station mobile et la seconde station mobile vont recevoir la transmission.

7. Procédé selon la revendication 1, consistant en outre à :
déterminer, avec la station de base, que la première propriété de trafic et la seconde propriété de trafic sont identiques ;
recevoir, avec la station de base, une troisième demande d'enregistrement sur le réseau sans fil depuis une troisième station mobile de la pluralité de stations mobiles, dans lequel la troisième demande d'enregistrement comprend une troisième propriété de trafic ; et
ne pas communiquer, avec la station de base, l'identifiant de groupe attribué à la troisième station de base parce que la troisième propriété de trafic n'est pas identique à la première propriété de trafic.

8. Procédé selon la revendication 1, consistant en outre à :
recevoir, avec la station de base, des données depuis la première station mobile et la seconde station mobile en utilisant des ressources de programmation agrégées.

9. Procédé selon la revendication 7, consistant en outre à :
recevoir, avec la station de base, des données depuis la troisième station mobile en utilisant des ressources de programmation distinctes.

10. Station mobile ayant une capacité machine-à-machine (60), comprenant :
une ou plusieurs antennes (660) pour transmettre un signal et recevoir un second signal dans un réseau sans fil (100A) ;
un émetteur-récepteur (650) pour convertir les signaux reçus en format numérique et convertir les signaux à émettre en format analogique ; et
un logiciel (620) exécuté par un processeur (610), le logiciel servant à traiter les signaux reçus et les signaux à émettre, le logiciel servant en outre à :
transmettre (440) une demande d'enregistrement sur le réseau sans fil à une station de base sur le réseau sans fil, dans laquelle la demande d'enregistrement comprend une propriété de trafic ;
recevoir un identifiant de connexion depuis la station de base ;
recevoir (420) un identifiant de groupe attribué depuis la station de base, dans laquelle l'identifiant de groupe attribué est basé sur d'autres stations mobiles partageant des propriétés de trafic similaires ; et
recevoir un message de radiomessagerie sur un canal de radiomessagerie en utilisant l'identifiant de groupe attribué.

11. Station mobile ayant une capacité machine-à-machine selon la revendication 10, dans laquelle le logiciel est en outre conçu pour :
faire passer la station mobile en mode de veille ;
la station mobile écoutant un canal de radiomessagerie pour recevoir le message de radiomessagerie pendant le mode de veille.

12. Station mobile ayant une capacité machine-à-machine selon la revendication 10, dans laquelle le logiciel est en outre conçu pour :
passer en mode de sommeil ;
la station mobile écoutant un canal de radiomessagerie pour recevoir le message de radiomessagerie pendant le mode de sommeil.

13. Station mobile ayant une capacité machine-à-machine selon la revendication 10, dans laquelle le logiciel est en outre conçu pour :
recevoir une diffusion depuis la station de base sur le canal de radiomessagerie, dans laquelle la diffusion utilise l'identifiant de groupe attribué.

14. Station mobile ayant une capacité machine-à-machine selon la revendication 10, dans laquelle le logiciel est en outre conçu pour :
envoyer des données à la station e base en utilisant une agrégation.

15. Station mobile ayant une capacité machine-à-machine selon la revendication 10, dans laquelle le logiciel est en outre conçu pour :
envoyer des données à la station de base en utilisant des ressources de programmation distinctes.
